# EUROPÄISCHE PATENTSCHRIFT

(11) **EP 0 978 006 B1**
(45) Veröffentlichungstag und Bekanntmachung des Hinweises auf die Patenterteilung: **20.03.2002**
(21) Anmeldenummer: 98929260.2
(22) Anmeldetag: 23.04.1998
(51) Int. Cl.: G02B 6/34, G02B 5/18, G01J 3/18, B29D 11/00

(54) **VERFAHREN UND FORM ZUR HERSTELLUNG MINIATURISIERTER FORMENKÖRPER**
METHOD FOR MAKING A CAST PART, AND MOULD NEEDED FOR IMPLEMENTING SAME
PROCEDE DE FABRICATION D'UNE PIECE MOULEE, ET MOULE A UTILISER AVEC CE PROCEDE

(30) Priorität: 23.04.1997 DE 19717014
(43) Veröffentlichungstag der Anmeldung: 09.02.2000
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); LACHER, Manfred, D-55116 Mainz (DE); WEBER, Lutz, D-55288 Gabsheim (DE); PECH, Bernhard, D-55118 Mainz (DE); HOSSFELD, Jens, D-61381 Friedrichsdorf (DE); DIEL, Torsten, D-64405 Fischbachtal (DE)
(74) Vertreter: Fuchs Mehler Weiss & Fritzsche
(86) Internationale Anmeldenummer: EP9802401
(87) Internationale Veröffentlichungsnummer: WO9848306

(56) Entgegenhaltungen:
- EP-A- 0 758 079
- DE-A- 3 611 246
- US-A- 5 550 375
- MOHR J ET AL: "FABRICATION OF A PLANAR GRATING SPECTROGRAPH BY DEEP-ETCH LITHOGRAPHY WITH SYNCHROTRON RADIATION" SENSORS AND ACTUATORS A, Bd. A27, Nr. 1 - 03, 1. Mai 1991, Seiten 571-575, XP000216795

## Beschreibung

Die Erfindung betrifft ein Verfahren zur Herstellung eines miniaturisierten optischen Bauelementsgemäß dem Oberbegriff des Patentanspruchs 1.

Komplexe optische miniaturisierte Bauelemente wurden bisher in der Weise hergestellt, daß die Einzelkomponenten wie Beugungsgitter, Spiegel usw. in getrennten Fertigungsverfahren hergestellt, dann sorgfältig justiert und montiert werden mußten. Für die Massenfertigung waren diese Verfahren nicht geeignet, weil jedes optische miniaturisierte Bauelement die aufwendige Justierung der Einzelkomponenten erforderlich macht.

Um hier Abhilfe zu schaffen, wurde in der DE 3611246 C2 vorgeschlagen, die optischen Komponenten des Bauelementes einschließlich des oder der Echelette-Gitter auf röntgenlithographischem, röntgentiefenlithographischgalvanoplastischem oder hiervon abgeleiteten abformtechnischem Wege herzustellen, wobei die Gitterlinien parallel zur Röntgenstrahlung verlaufen. Dieses Verfahren hat jedoch den Nachteil, daß dreidimensionale Strukturen, wie z.B. in zwei Ebenen gekrümmte Spiegel nicht hergestellt werden können, weil in Richtung der Röntgenstrahlung wegen der geradlinigen Ausbreitung keine Strukturierung möglich ist.

Bei diesen mikrotechnischen Verfahren eröffnet die LIGA-Technik eine große Form- und Materialvielfalt sowie eine hohe Präzision der Detailstrukturen (s. z.B. W. Ehrfeld, H. Lehr, Rad. Physics and Chemistry, 1995, Pergamon Press). Dabei entstehen Formeinsätze, die durch verschiedene Abformtechniken als Kunststoff-, Metall- oder Keramikteil repliziert werden können und eine Strukturierung nur an den Seitenwänden des Hohlkörpers aufweisen.

Durch die Abformung eines mittels LIGA-Technik gefertigten, geöffneten Hohlkörpers wird dessen Seitenwandprofil (z.B. Gitter, Spiegel) übertragen. Die optischen Elemente weisen dabei nur in einer Ebene eine Krümmung auf, so daß eine Fokussierung des Lichts nur in dieser Ebene stattfindet. Bei der Herstellung miniaturisierter optischer Bauelemente wird zur Führung und Begrenzung des Lichtwegs in der dazu senkrechten Richtung deshalb eine Schichtwellenleiteranordnung eingesetzt, deren Höhe beschränkt ist (vgl. z.B. Interdisciplinary Science Reviews, 1993, 18, No. 3, S. 273).

Bei diesen miniaturisierten optischen Bauelementen besteht ein weiterer Nachteil darin, daß aufgrund der durch das Herstellungsverfahren begrenzten Schichtdicke des optischen Bauelementes dieses an der Ober- und Unterseite mit jeweils einem Substrat versehen werden muß, so daß eine Schichtwellenleiteranordnung entsteht, bei der das Licht durch Totalreflexion an der Grenze des Mikrobauelementes zum Substrat innerhalb des Mikrobauelementes geführt wird. Da diese Grenzfläche im allgemeinen nicht genügend glatt ausgeführt ist, tritt hierbei störende Streustrahlung auf.

Wegen der Modenabhängigkeit der Ausbreitungskonstanten tritt bei Schichtwellenleiteranordnungen jedoch eine Auflösungsverminderung ein (vgl. A. Reule, Optik 66, No. 1 (1983), S. 73-90). Es ist daher wünschenswert, eine Freistrahloptik bei miniaturisierten Bauelementen zu realisieren, bei der die Lichtstrahlen sich ungehindert im miniaturisierten optischen Bauelement ausbreiten können. Es muß daher nach einem Herstellungsverfahren gesucht werden, das es gestattet, in zwei Ebenen gekrümmte Seitenwände des miniaturisierten Bauelementes zu fertigen und damit eine Fokussierung des Lichts in zwei zueinander senkrechten Ebenen sowie eine verbesserte Auflösung zu realisieren.

Es sind zwar sogenannte monolithische Miniaturspektrometer bekannt, die eine solche Freistrahloptik erlauben, allerdings muß hier zunächst ein Glaskörper ohne Strukturierung hergestellt werden. Alle optischen Komponenten, wie abbildendes Gitter, Faserquerschnittswandler als optische Eingänge und Diodenzeilen als opto-elektronische Ausgänge sind um den Zentralkörper angeordnet und müssen mit diesem verklebt werden, was ebenfalls bei jedem Bauelement eine entsprechende Justierung erforderlich macht.

Ein ähnliches Verfahren ist aus der EP 0 489 286 B1 bekannt. Das Ausbilden von Strukturen durch Heißpressen einzelner Flächen eines Glaskörpers wird in der DE 32 16 516 A1 beschrieben, wobei dann, wenn mehrere Flächen strukturiert werden sollen, mehrere Glaskörper hergestellt und bearbeitet und anschließend zusammengeklebt werden müssen.

Der Erfindung liegt die Aufgabe zugrunde, ein optisches Bauelement zu schaffen, bei dem die Fertigung der Komponenten in gemeinsamen Arbeitsgängen unter Wegfall einer gesonderten Justierung ermöglicht wird.

Die Lösung der Aufgabe ist im Anspruch 1 beschrieben. Aus dem Verfahren von Anspruch 1 resultiert ein Bauelement bei dem sich die Freistrahlanordnung in einem Hohlraum befindet, der von einem einstückigen, abformtechnisch hergestellten Bauteil begrenzt ist, das auf seiner dem Hohlraum zugewandten Innenfläche die optische Mikrostruktur und die Anschlußstruktur für Licht aufweist.

Ein einstückiges Bauteil, bei dem während der Herstellung bereits die optischen Mikrostrukturen und Anschlußstruktur hergestellt werden, bietet den Vorteil, daß keinerlei Justierung der einzelnen optischen Komponenten notwendig ist. Die räumliche Zuordnung wird somit in den Herstellungsprozeß verlagert, wodurch eine weitaus höhere Genauigkeit erreicht werden kann, als dies beim Zusammensetzen einzelner Bauteile möglich wäre.

Als optische Mikrostruktur kann eine gekrümmte Beugungsgitterstruktur in Frage kommen. Es ist auch möglich, mehrere Mikrostrukturen an der Innenfläche auszubilden, die mindestens eine planare oder gekrümmte Beugungsgitterstruktur und mindestens eine planare oder gekrümmte Hohlspiegelstruktur umfassen kann.

Zusätzlich kann das Bauteil mindestens eine Ausnehmung zur Aufnahme eines Detektors aufweisen.

Das einstückige Bauteil kann aus Metall, einer Legierung, einer Keramik oder einem Kunststoff bestehen. Es besteht auch die Möglichkeit gemäß einer weiteren Ausführungsform mehrere Materialien zu kombinieren, so daß trotz Temperatur- oder Feuchtigkeitsschwankungen eine gleichbleibend hohe Präzision bezüglich der räumlichen Zuordnung der Mikrostrukturen erhalten bleibt. Vorzugsweise kann das Bauteil mehrere Lagen unterschiedlicher Materialien aufweisen.

Das Verfahren zur Herstellung eines solchen optischen Bauelementes ist dadurch gekennzeichnet, daß ein Formenkörper mit Strukturen an seiner Außenseite, die zu der oder den optischen Mikrostruktur/en und der Anschlußstruktur für Licht des optischen Bauelementes komplementär sind, abgeformt wird.

Die Grundform des Formenkörpers läßt sich in einem einzigen kostengünstigen Abformschritt vorzugsweise aus nur einem Material herstellen. Als Werkstoffe können beliebige, für den jeweils vorgesehenen Einsatzzweck angepaßte Materialien oder Materialkombinationen, insbesondere Kunststoffe, verwendet werden. Vorzugsweise wird ein Polymermaterial, beispielsweise PMMA oder PC. verwendet. Das Material muß in der Lage sein, Strukturen mit Detailabmessungen im Submikrometerbereich ohne die Bildung störender Hohlräume vollständig auszufüllen. Je nachdem welches Material verwendet wird, erfolgt das Verfestigen durch Aushärten, z.B. bei der Verwendung von Reaktionsharzen, oder durch Abkühlen, z.B. bei der Verwendung von geschmolzenem Polymermaterial. Es ist auch möglich, Gießharze auf Methacrylbasis in die Form einzubringen und eine Polymerisation in der Form durchzuführen.

Aufgrund der Festlegung der räumlichen Zuordnung der Strukturen sind diese vorzugsweise ausschließlich auf den Wänden der für die Herstellung vorgesehenen, vorzugsweise selbstjustierenden Formeinsätze vorgesehen. Die Anzahl der Formeinsätze richtet sich nach der Komplexität der Strukturen sowie nach der Anzahl der Flächen des Formenkörpers, die Strukturen aufweisen sollen. Als Strukturen bei optischen Mikrobauelementen können planare oder gekrümmte Beugungsgitterstrukturen, planare oder gekrümmte Spiegelstrukturen und/oder mindestens eine Anschlußstruktur für polychromatisches und/oder monochromatisches Licht auf oder in den Wänden der selbstjustierenden Formeinsätze vorgesehen sein.

Nach der Entnahme des Formenkörpers aus der Form wird dieser zur Herstellung des optischen Bauelementes abgeformt. Vor dem Abformen wird vorzugsweise mindestens ein Teil der Mikrostrukturen des Formenkörpers verspiegelt.

Das Abformen kann durch das Aufbringen mindestens einer metallischen Schicht und/oder einer Kunststoffschicht auf dem Formenkörper erfolgen. Anschließend wird das Material des Formenkörpers entfernt, was beispielsweise mit bekannten Ätztechniken erfolgen kann.

Der Aufbau des optischen Bauelementes erfolgt vorzugsweise durch selektive Abscheidung verschiedener Funktionsschichten auf dem Formenkörper. Die Oberflächenbeschichtung wird beispielsweise ortsselektiv am Formenkörper vorgenommen und dient mehreren Zwecken:
- als elektrisch leitende und haftfähige Startschicht für den nachfolgenden Galvanisierungsprozeß,
- als Startschicht mit höchster Reflektivität im Spiegel- und Gitterbereich
- als Absorptionsschicht für Wandbereiche, die nicht im Sollstrahlengang liegen.

Das Aufbringen der Schichten kann durch selektives Aufdampfen, Sputtern oder Galvanisieren metallischer Schichten erfolgen, wobei die Ortsselektivität durch eine Maskierung während der Beschichtung erreicht wird. Spiegel- und Gitterbereiche am ersten Formenkörper werden typischerweise mit einer Goldschicht bedeckt, wohingegen die allgemeine Startschicht z.B. aus Schwarzchrom besteht und somit durch einen sehr niedrigen Reflexionsgrad Streulichteinflüsse bei einer Nutzung des optischen Bauelements als Spektrometer reduziert. Der Metallkörper wird durch galvanische Abscheidung weiter aufgebaut und verstärkt, so daß schließlich eine stabile metallische Ummantelung des Formenkörpers vorliegt.

Anschließend wird der Polymerkern beispielsweise durch Spülen mit einem Lösungsmittel herausgelöst, so daß letztlich ein metallischer Hohlkörper vorliegt.

Für die Herstellung es Hohlkörpers können auch andere Materialien wie Keramiken, Legierungen oder Kunststoffe, beispielsweise auch in Kombination untereinander oder mit Metall verwendet werden, wobei ein Aufbau in Schichten oder Lagen hergestellt wird. Ein geeigneter Kunststoff ist beispielsweise ein Epoxid-Harz.

Um den thermischen Ausdehnungskoeffizienten eines metallischen optischen Bauelements zu minimieren, läßt sich dieses z.B. aus Nickel-Eisen-Legierung mit geringem Ausdehnungskoeffizienten aufbauen (z.B. 65% Fe, 35% Ni). Der so entstehende stabile metallische Hohlkörper weist somit gegenüber Formenkörpern, die aus Polymermaterialien bestehen oder bei denen Licht in Polymermaterialien geführt wird, entscheidende Vorteile auf:
- Die in den Hohlkörpern eingeführte elektromagnetische Strahlung wird durch keinerlei wellenlängenabhängige Dämpfung, Dispersion oder Absorption beeinträchtigt, wie dies z.B. bei Polymermaterialien im ultravioletten und infraroten Bereich auftritt.
- Durch die Anwendung eines metallischen Formenkörpers wird dessen Einsatzfähigkeit in einem weiten Temperaturbereich möglich. Dies ist ein weiterer Vorteil gegenüber Polymermaterialien, da deren linearer thermischer Ausdehnungskoeffizient um ein bis zwei Größenordnungen größer als bei metallischen Materialien ist.
- Ein metallischer Formenkörper weist eine höhere mechanische Festigkeit auf.

Die räumliche Zuordnung der Strukturen bleibt auch beim optischen Bauelement erhalten, so daß keine Justierung erforderlich ist.

Als weitere Ausführungsform kann als Formenkörper auch ein Hohlkörper verwendet werden. Vorteilhaft hierbei ist, daß dieer Formenkörper schneller durch beispielsweise Herauslösen entfernt werden kann.

Beispielhafte Ausführungsformen werden nachfolgend anhand der schematischen Zeichnungen näher erläutert:

Es zeigen:
- Fig. 1: ein erfindungsgemäßes optisches Bauelement im Schnitt,
- Fig. 2: ein weiteres optisches Bauelement im Schnitt,
- Fig. 3: zwei selbstjustierende Formeinsätze zur Herstellung eines Formenkörpers in Draufsicht,
- Fig. 4: die Beschichtung eines Formenkörpers,
- Fig. 5: die dreidimensionale Darstellung eines Formenkörpers.

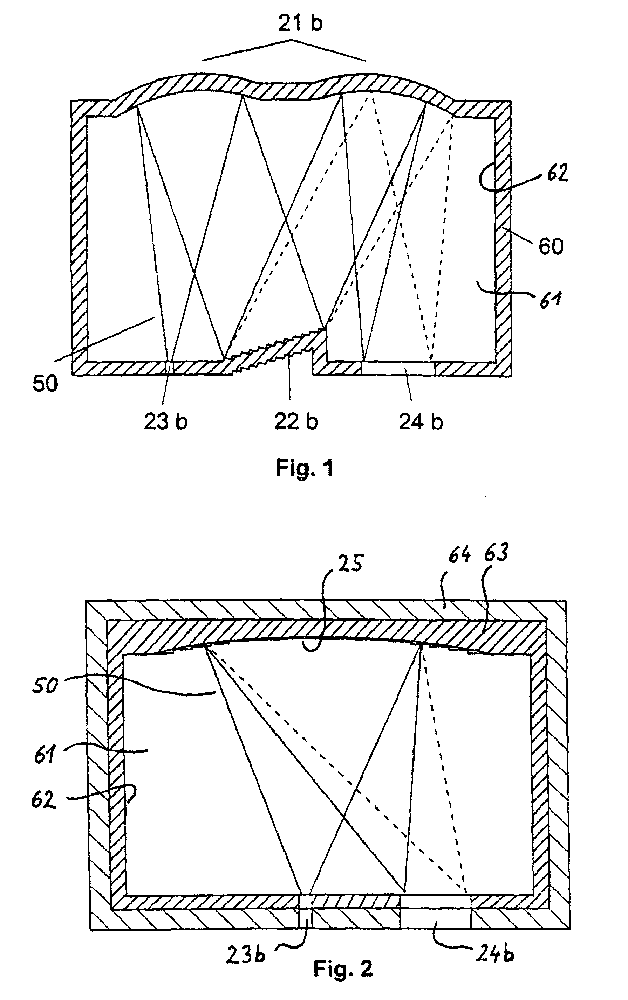

In der Fig. 1 ein erfindungsgemäßes optisches Bauelement dargestellt. In dem durch das einstückige Bauteil 60 begrenzten Hohlraum 61 befindet sich eine Freistrahlanordnung. Die dem Hohlraum 61 zugewandte Innenfläche 62 des Bauteils 60 weist optische Mikrostrukturen 21b und 22b, eine Anschlußstruktur 23b für Licht und eine Anschlußstruktur 24b zur Aufnahme eines Detektors auf. Die beiden optischen Mikrostrukturen 21b stellen hier Hohlspiegel dar. Auf der gegenüberliegenden Innenfläche ist eine Beugungsgitterstruktur 22b angeordnet. Das Bauteil besteht aus einer Schicht eines Materials, beispielsweise Metall. Die optischen Mikrostrukturen 21b und 22b sind verspiegelt. Die übrige Innenfläche des optischen Bauteils kann eine Licht absorbierende Schicht, beispielsweise Schwarz-Chrom, zur Reduktion von Streulicht aufweisen. Ober- und unterhalb der dargestellten Schnittebene weist das optische Bauelement jeweils eine Wand auf, die den Hohlraum nach außen hin lichtdicht abschließt.

In der Fig. 1 is der Strahlengang in dem Hohlraum des optischen Bauelementes mit durchgezogenen und durchbrochenen Linien angedeutet. Über die Anschlußstruktur 23b wird Licht in den Hohlraum 61 gelenkt, wobei die divergenten Lichtstrahlen 50 durch den konkav gekrümmten linken Fokussierspiegel 21b parallelisiert und auf das Gitter 22b gelenkt werden. Dort werden die Lichtstrahlen winkeldispersiv aufgespalten und einem weiteren, dem rechten Fokussierspiegel 21b zugeleitet, der die unterschiedlichen Wellenlängen ortsdispersiv in einer Ebene abbildet, die auf der Anschlußstruktur 24b liegt.

Die Anschlußstruktur 23b für Licht kann eine Aufnahme und Halterung für eine Glasfaser sein. So kann die Anschlußstruktur 23b beispielsweise eine kanalartige Ausnehmung im Bauteil 60 sein, in der die Glasfaser eingelegt und mittels eines Klebers in ihrer Lage fixiert werden kann.

Dadurch, daß die optischen Strukturen 21b, 22b, 23b und 24b in dem Bauteil 60 integriert sind, sind diese Strukturen mit der Herstellung des Bauteils in ihrer Lage festgelegt. Damit entfällt nach der Herstellung eine Justierung der Strukturen und eine Fixierung in ihrer Lage.

In der Fig. 2 ist ein weiteres erfindungsgemäßes optisches Bauelement dargestellt. Das den Hohlraum 61 abschließende Bauteil wird von zwei Lagen 63 und 64 gebildet. Die innere Lage 63 weist auf ihrer Innenfläche 62 eine gekrümmte Gitterstruktur 25, eine Anschlußstruktur 23b für Licht und Anschlußstruktur 24b für einen Detektor auf. Die Gitterstruktur 25 ist verspiegelt, wohingegen die übrige Innenfläche 62 mit einer Licht absorbierenden Schicht versehen ist. Der Strahlengang des Lichts ist anhand der durchgezogenen und gestrichelten Linien angedeutet. Das divergierend einfallende Licht 50 wird von der konkav gekrümmten Beugungsgitterstruktur 25, beispielsweise einem holographischen Gitter, winkeldispersiv in einer Bildebene abgebildet, die auf der Anschlußstruktur 24b liegt.

Die innere Lage 63 kann beispielsweise eine dünne metallische Schicht sein, die zur Erhöhung der mechanischen Stabilität von einer äußeren Lage 64, beispielsweise eines Epoxid-Harzes, umgeben ist. Es ist auch denkbar, daß das Bauteil aus mehr als zwei Lagen aufgebaut ist.

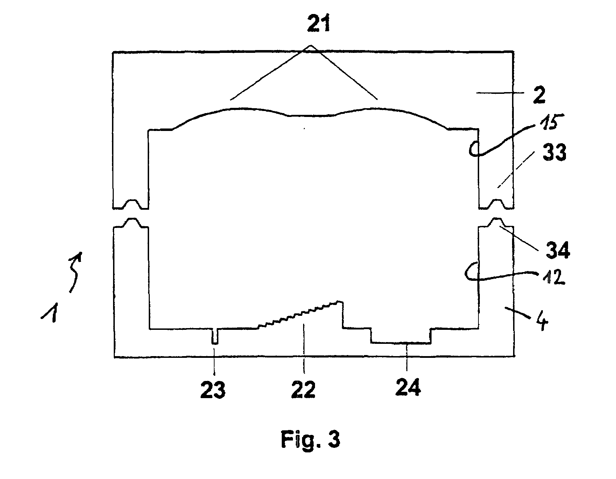

In der Fig. 3 ist die Draufsicht auf eine Form 1 dargestellt, die aus zwei Formeinsätzen 2 und 4 besteht. Mittels dieser Form kann ein Formenkörper abformtechnisch erhalten werden, der wiederum zur abformtechnischen Herstellung des in Fig. 1 dargestellten optischen Bauelementes dient. Die Innenwand 15 des Formeinsatzes 2 weist zwei Hohlspiegelstrukturen 21 auf. Die gegenüberliegende Innenwand 12 des Formeinsatzes 4 weist eine Anschlußstruktur 23 für Licht, eine Anschlußstruktur 24 für einen Detektor und eine planare Beugungsgitterstruktur 22 auf. Nicht dargestellt sind die unter- und oberhalb der dargestellten Schnittebene liegende, nicht strukturierte Boden- und die Deckplatte, die den Formenhohlraum abschließen.

Da es bei dem herzustellenden Formenkörper nicht nur auf die räumliche Zuordnung der Strukturen 22, 23 und 24 zueinander, sondern auch auf deren räumliche Zuordnung zu den Strukturen 21 ankommt, ist eine Justierung der Formeinsätze 2 und 4 zueinander erforderlich. Hierzu weist der Formeinsatz 2 nutförmige Vertiefungen 33 und der Formeinsatz 4 entsprechend geformte in diese Ausnehmungen eingreifende Vorsprünge 34 auf. Beim Zusammensetzen der beiden Formeinsätze 2 und 4 erfolgt mittels der Justagemittel 33, 34 deren präzise Justierung zueinander.

Die Abformung des Formenkörpers mittels der Form 1 kann über Spritzgießen oder Spritzprägen erfolgen. Als Formstoff wird vorteilhaft ein Polymer, wie PMMA, gewählt, das sich leicht mittels eines Lösungsmittels oder Lösungsmittelgemisches lösen läßt, und das eine hohe Abformgenauigkeit der optischen Mikrostrukturen ermöglicht.

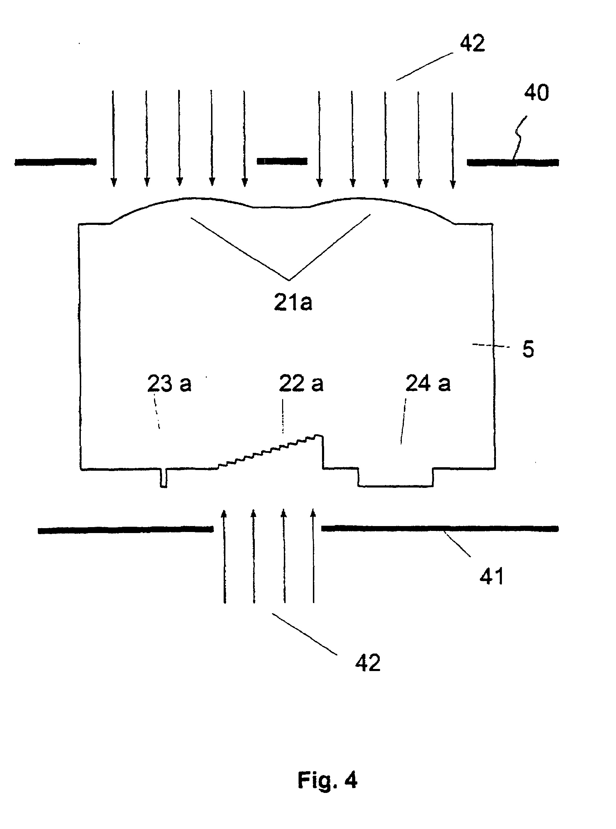

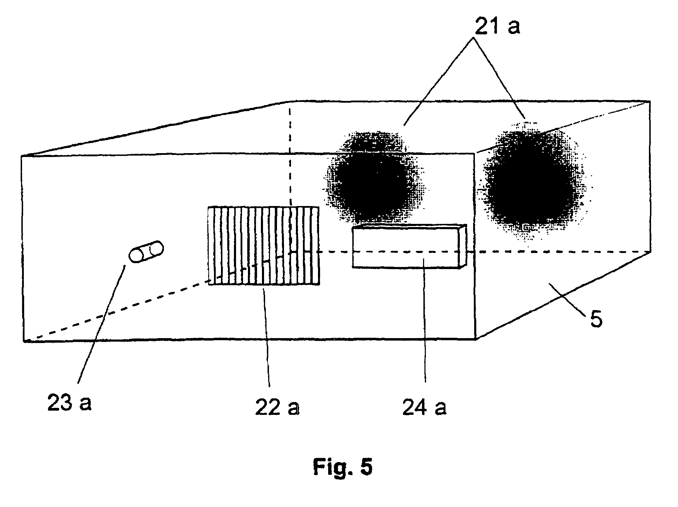

In der Fig. 4 ist der Schnitt durch einen mit der Form 1 hergestellter Formenkörper 5 dargestellt, der zur Herstellung des optischen Bauteils nach Fig. 1 dient. Die Strukturen 21-24 der Form 1 finden sich im Formenkörper 5 als entsprechende Strukturen 21a-24a wieder. Da die Strukturen 21a und 22a Hohlspiegel bzw. ein Gitter ergeben sollen, ist eine metallische Beschichtung zur Herstellung einer Spiegelschicht erforderlich. Dies kann beispielsweise mit Hilfe von Masken 40, 41 erfolgen, wobei die Pfeile 42 die Richtung des Materialflusses bei dem Beschichtungsvorgang anzeigen. Es erfolgt eine flächenselektive Beschichtung, so daß sich ein Formenkörper 5 ergibt, wie er in der Fig. 5 dargestellt ist.

Dieser Formenkörper wird nun, beispielsweise galvanisch, abgeformt. Hierzu wird die Oberfläche des Formenkörpers 5 mit einer elektrisch leitenden Startschicht versehen. Dies kann durch Sputtern oder Aufdampfen, beispielsweise einer Schicht aus Schwarz-Chrom, welches sich durch einen niedrigen Reflexionsgrad auszeichnet, erfolgen. Anschließend wird galvanisch eine Metallschicht, zum Beispiel aus einer Eisen-Nickel-Legierung, aufwachsen lassen. Es kann solange galvanisch abgeschieden werden, bis die resultierende Schichtdicke eine ausreichende mechanische Stabilität begründet, oder es wird eine oder mehrere weitere Lagen eines oder unterschiedlicher Materialien, beispielsweise eines Epoxid-Harzes aufgebracht.

Anschließend wird der Formenkörper 5 aus dem so erhaltenen Bauteil entfernt. Dies kann durch Herauslösen mittels eines geeigneten Lösungsmittels oder Lösungsmittelgemisches erfolgen. Hierzu kann das Lösungsmittel über die Anschlußstrukturen 23b, 24b an den Formenkörper 5 herangeführt werden. Besonders vorteilhaft ist hierzu der Formenkörper 5 als Hohlkörper ausgeführt, wodurch das Auflösen aufgrund der größeren inneren Oberfläche beschleunigt wird.

### Bezugszeichen:

- 1: Form
- 2: Formeinsatz
- 4: Formeinsatz
- 5: Formenkörper
- 12-15: Innenwand
- 21: Hohlspiegelstruktur
- 21a,b: Hohlspiegel
- 22: Gitterstruktur
- 22a,b: Gitterstruktur
- 23: Anschlußstruktur
- 23a,b: Anschlußstruktur
- 24: Anschlußstruktur
- 24a,b: Anschlußelement
- 25: gekrümmte Gitterstruktur
- 33: keilförmige Nut
- 34: keilförmiger Vorsprung
- 40: Maske
- 41: Maske
- 42: Pfeil
- 50: Lichtstrahl
- 60: Bauteil
- 61: Hohlraum
- 62: Innenfläche
- 63: Schicht, Lage
- 64: Schicht, Lage

## Patentansprüche

1. Verfahren zur Herstellung eines optischen Bauelementes mit einer in einem Hohlraum befindlichen Freistrahlanordnung, wobei der Hohlraum von einem einstückigen, abformtechnisch hergestellten Bauteil begrenzt ist, das auf seiner dem Hohlraum zugewandten Innenfläche mindestens eine optische Mikrostruktur und mindestens eine Anschlußstruktur für Licht aufweist, **dadurch gekennzeichnet, daß** ein Formenkörper (5) mit Strukturen an seiner Außenseite, die zu der oder den optischen Mikrostruktur/en und der Anschlußstrukur für Licht des optischen Bauelements komplementär sind, hergestellt wird und daß auf den Formenkörper mindestens eine Schicht aus Metall und/oder Legierung und/oder Keramik und/oder Kunststoff aufgebracht und anschließend das Material des Formenkörpers entfernt wird.

2. Verfahren nach Anspruch 1, **dadurch gekennzeichnet, daß** als Formenkörper ein Hohlkörper verwendet wird.

3. Verfahren nach Anspruch 1 oder 2, **dadurch gekennzeichnet, daß** als Formenkörper ein mittels eines Abformverfahrens hergestellter Formenkörper aus mindestens einem Kunststoff verwendet wird.

4. Verfahren nach einem der Ansprüche 1 bis 3, **dadurch gekennzeichnet, daß** vor dem Abformen zumindest ein Teil der Mikrostrukturen des Formenkörpers verspiegelt wird.

## Claims

1. Process for producing an optical component having a free-jet arrangement situated in a cavity, wherein the cavity is defined by an integral component produced by moulding technology, which has at least one optical microstructure and at least one connection structure for light on its inner surface facing the cavity, **characterised in that** a shaping body (5) having structures on its outer side, which are complementary to the optical microstructure(s) and the connection structure for light of the optical component, is produced and **in that** at least one layer of metal and/or alloy and/or ceramic and/or plastic is applied to the shaping body and then the material of the shaping body is removed.

2. Process according to claim 1, **characterised in that** a hollow body is used as shaping body.

3. Process according to claim 1 or 2, **characterised in that** a shaping body made from at least one plastic and produced by means of a moulding process is used as shaping body.

4. Process according to one of claims 1 to 3, **characterised in that** before moulding, at least some of the microstructures of the shaping body are metallised.

## Revendications

1. Procédé pour la fabrication d'un composant optique avec un agencement à faisceau libre se trouvant dans une cavité, la cavité étant délimitée par un élément de construction d'une seule pièce et fabriqué par moulage, qui présente sur sa surface intérieure tournée vers la cavité au moins une microstructure optique et au moins une structure de raccordement pour la lumière, **caractérisé en ce qu'**un corps de moule (5) est fabriqué avec des structures sur son côté extérieur, qui sont complémentaires par rapport à la (aux) microstructure(s) optique(s) et à la structure de raccordement pour la lumière du composant optique et **en ce qu'**au moins une couche de métal et/ou d'alliage et/ou de céramique et/ou de matière plastique est appliquée sur le corps de moule, et le matériau du corps du moule est ensuite enlevé.

2. Procédé selon la revendication 1, **caractérisé en ce qu'**un corps creux est utilisé comme corps de moule.

3. Procédé selon la revendication 1 ou 2, **caractérisé en ce qu'**un corps de moule fabriqué au moyen d'un procédé de moulage et à base d'au moins une matière plastique, est utilisé comme corps de moule.

4. Procédé selon l'une quelconque des revendications 1 à 3, **caractérisé en ce qu'**au moins une partie des microstructures du corps de moule est rendue réfléchissante avant le moulage.
